# EUROPEAN PATENT SPECIFICATION

(11) **EP 1 622 008 B1**
(45) Date of publication and mention of the grant of the patent: **27.02.2008**
(21) Application number: 04103678.1
(22) Date of filing: 30.07.2004
(51) Int. Cl.: G06F 9/44

(54) **Method for customizing the visual attributes of a user interface**
Methode zur Individualisierung von visuellen Attributen einer Benutzeroberfläche
Méthode pour individualisation d'attributs visuels d'une interface utilisateur graphique

(43) Date of publication of application: 01.02.2006
(73) Proprietor: Research In Motion Limited, Waterloo, Ontario N2L 3W8 (CA)
(72) Inventor: Bells, Matthew, Waterloo, Ontario N2L 6M2 (CA)
(74) Representative: Rickard, David John

(56) References cited:
- US-B1- 6 518 976
- FRIESEN, JEFF: "Simple Tips for More Powerful Tables" INTERNET ARTICLE, [Online] 20 November 2001 (2001-11-20), XP002325052 Retrieved from the Internet: URL:http://www.informit.com/articles/print erfriendly.asp?p=24121> [retrieved on 2005-04-18]
- FRIESEN, JEFF: "Exploring Swing's Table Component" ONLINE ARTICLE, [Online] 20 November 2001 (2001-11-20), XP002325053 Retrieved from the Internet: URL:http://www.informit.com/articles/print erfriendly.asp?p=24130> [retrieved on 2005-04-14]
- HOLZGANG, DAVID A.: "PostScript Programmer's Reference Guide" 1989, SCOTT, FORESMAN AND COMPANY , GLENVIEW, IL, USA , XP002325054 ISBN: 0673385744 * page 132, line 11 - line 13 *

## Description

The present application relates to customizable user interfaces and, in particular, to a method for customizing the visual attributes of a complex field within a user interface.

A graphical user interface on a mobile electronic device, or any other user device, is typically formed from a hierarchy of fields and managers. In some languages, these fields may include complex fields having more than one region.

A user interface may be rendered on a display screen in accordance with a theme, which specifies the visual attributes associated with fields in the user interface. In some themes, different visual attributes may be associated with specific fields. Visual attributes may include things such as colours, fonts, font-size, font-weight, background images, etc. Accordingly, the theme governs the look-and-feel of the user interface. Different themes may be applied to change the look-and-feel of a user interface without affecting the substantive functioning of the interface.

A theme may associate a field with a specific theme-attribute set. A difficulty that arises in customizing user interfaces is that a field is typically associated with only one theme-attribute set, meaning that all parts of the field are subject to the same visual attributes. Accordingly, complex fields having more than one region are uniform in their visual attributes.

It would be advantageous to provide for a method or device in which different themes or visual attributes may be applied to different regions of a complex field in a user interface
**[0005A]** Friesen, Jeff: "Simple Tips for More Powerful Tables", XP002325052 from http://www.informit.com/articles/printerfriendly.asp?p=24121 retrieved on 18-April-2005 discloses a method of colouring individual cells dependent on the numerical value of the contents of the respective cells. The way in which these visual attributes are applied is hard-coded into the rendering software.

### GENERAL

The present application describes methods, devices, and computer program products that enable the customization of visual attributes of a region within a complex field in user interface. The application provides a mechanism for overriding a predefined theme or visual attribute with respect to the region and applying a new theme or visual attribute to the region, while maintaining application of the predefined theme for the remainder of the complex field.

In one aspect, the present application provides a method for customizing a complex field in a user interface, the complex field having at least two regions. The method includes steps of providing a theme file defining predefined visual attributes and defining a regional visual attribute, associating the predefined visual attributes with the complex field, performing a rendering operation including storing the predefined visual attributes with respect to the complex field, and applying the regional visual attribute to one of the at least two regions. The method then includes steps of outputting graphics to the one of the at least two regions, the graphics conforming to the regional visual attribute, and restoring the predefined visual attributes with respect to the other regions the complex field.

In another aspect, the present application provides a mobile electronic device. The device includes a display screen for displaying a user interface, the user interface including a complex field having at least two regions, a memory, and a processor connected to the memory and to the display screen for controlling operation of the display screen. The memory storing a theme file defining predefined visual attributes and defining a regional visual attribute. A graphics component is associated with the processor for performing a rendering operation and, during said rendering operation, storing the predefined visual attributes associated with the complex field, applying the regional visual attribute to the one of the regions, outputting graphics to the one of the regions, and restoring the field visual attributes with respect to other regions of the complex field.

In yet another aspect, the present application provides a computer program product having a computer-readable medium tangibly embodying computer executable instructions for customizing a complex field in a user interface, the complex field having at least two regions. The computer executable instructions include computer executable instructions for providing a theme file defining predefined visual attributes and defining a regional visual attribute, associating the predefined visual attributes with the complex field, computer executable instructions for performing a rending operation including storing the predefined visual attributes with respect to the complex field, applying the regional visual attribute to one of the at least two regions, outputting graphics to the one of the at least two regions, the graphics conforming to the regional visual attribute, and restoring the predefined visual attributes with respect to the other regions the complex field.

### BRIEF DESCRIPTION OF THE DRAWINGS

Embodiments will now be described, by way of example only, with reference to the attached Figures, wherein:

Figure 1 is a block diagram of a mobile electronic device and a communications system to which embodiments may be applied;

Figure 2 diagrammatically shows a front view of the mobile electronic device 10 of Figure 1;

Figure 3(a) shows a front view of a user interface corresponding to "Contacts" software application;

Figure 3(b) diagrammatically shows the arrangement of fields for the user interface of Figure 3(a);

Figure 4 diagrammatically shows a field hierarchy for the user interface shown in Figures 3(a) and 3(b);

Figures 5(a)-(c) diagrammatically show examples of complex fields; and

Figure 6 shows, in flowchart form, a method of customizing a complex field in a user interface.

Like reference numerals are used throughout the Figures to denote similar elements and features.

### DESCRIPTION OF PREFERRED EMBODIMENTS

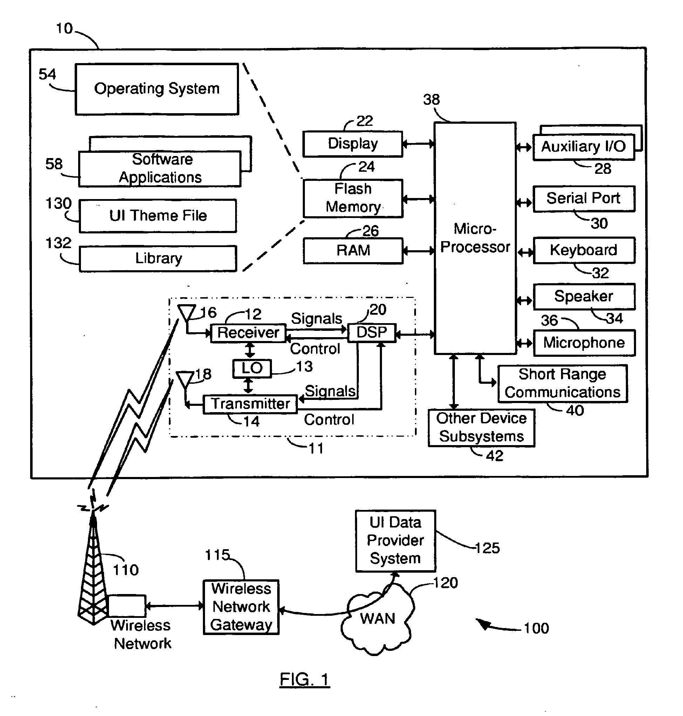

Referring first to Figure 1, there is a block diagram of a communication system 100 and mobile electronic device 10 to which example embodiments of the present application may be applied. The communication system 100 includes mobile electronic devices 10 (only one of which is shown in Figure 1), a wireless network 110 for communicating with the mobile electronic devices 10, and a wireless network gateway 115 for interfacing the wireless network 110 with a Wide Area Network (WAN) 120. The WAN 120 may connect the wireless network gateway 115 with a User Interface (UI) data provider system 125.

The wireless network gateway 115 provides an interface between the wireless network 110 in which the devices 10 operate, and the WAN 120 in which the UI data provider system 125 is configured to operate. The WAN 120 can in various embodiments include the Internet, a direct connection, a local area network (LAN), a wireless communication link, and any combinations thereof. In some embodiments, data generated by the UI data provider system 125 may be provided to devices 10 through a direct link or through a data transfer means other than through WAN 120, gateway 115 and wireless network 110.

The UI data provider system 125 may provide data and/or instructions for customizing user interface presentation on the mobile electronic devices 10. More particularly, the UI data provider system 125 provides information to mobile electronic devices 10 that can be used by such mobile electronic devices to customize or change the theme of the user interface that is presented by the device to a user. Theme refers to attributes of the visual components or elements of the user interface that affect the look, but not the underlying meaning or semantic content, of the visual components such as colors, fonts, icon look and size, background images, and logos, among other things. Theme-able attributes are those attributes of visual elements of the user interface that can be changed or customized based on information provided to the mobile electronic device 10 from the UI data provider system 125.

U.S. provisional patent application no. 60/499,437 filed September 2, 2003, describes methods and systems for customizing a user interface and provides details regarding a UI data provider system and the creation of user interface information by the UI data provider system.

In the embodiment of Figure 1, the mobile electronic device 10 is a hand-held two-way mobile communication device 10 having at least data and possibly also voice communication capabilities. In an example embodiment, the device has the capability to communicate with other computer systems on the Internet. In various embodiments, mobile electronic devices 10 includes data communication devices, multiple-mode communication devices configured for both data and voice communication, mobile telephones, mobile communication devices, PDAs enabled for wireless communications, 1-way or 2-way pagers, wireless modems operating in conjunction with computer systems, and any type of mobile wireless communication devices. In the presently described embodiment, each of the mobile electronic devices 10 is configured to operate within the wireless network 110. It should be appreciated however that the present application is in no way limited to these example types of devices and may be implemented in other devices with displays. Example embodiments may also be applied to non-wireless enabled devices.

The device 10 includes a communication subsystem 11, including a receiver 12, a transmitter 14, and associated components such as one or more, preferably embedded or internal, antenna elements 16 and 18, and a processing module such as a digital signal processor (DSP) 20. In some embodiments, the communication subsystem includes local oscillator(s) (LO) 13, and in some embodiments the communication subsystem and microprocessor 38 share an oscillator. As will be apparent to those skilled in the field of communications, the particular design of the communication subsystem 11 will be dependent upon the communication network in which the device is intended to operate.

Signals received by the antenna 16 through a wireless communication network 110 are input to the receiver 12, which may perform such common receiver functions as signal amplification, frequency down conversion, filtering, channel selection and the like, and in some embodiments, analog to digital conversion. In a similar manner, signals to be transmitted are processed, including modulation and encoding for example, by the DSP 20 and input to the transmitter 14 for digital to analog conversion, frequency up conversion, filtering, amplification and transmission over the communications network 110 via the antenna 18.

The device 10 includes a microprocessor 38 that controls the overall operation of the device. The microprocessor 38 interacts with communications subsystem 11 and also interacts with further device subsystems such as the display 22, flash memory 24, random access memory (RAM) 26, auxiliary input/output (I/O) subsystems 28 (which may include a thumb-wheel, for example), serial port 30, keyboard or keypad 32, speaker 34, microphone 36, a short-range communications subsystem 40, and any other device subsystems generally designated as 42.

Some of the subsystems shown in Fig. 1 perform communication-related functions, whereas other subsystems may provide "resident" or on-device functions. Notably, some subsystems, such as keyboard 32 and display 22 for example, may be used for both communication-related functions, such as entering a text message for transmission over a communication network, and device-resident functions such as a calculator or task list.

Operating system software 54 and various software applications 58 used by the microprocessor 38 are, in one example embodiment, stored in a persistent store such as flash memory 24 or similar storage element. Software applications 58 may include a wide range of applications, including an address book application, a messaging application, a calendar application, and/or a notepad application. Each software application 58 may include layout information defining the placement of particular fields in the user interface for the software application 58, such as text fields, input fields, etc. Those skilled in the art will appreciate that the operating system 54, specific device applications 58, or parts thereof, may be temporarily loaded into a volatile store such as RAM 26. It is contemplated that received communication signals may also be stored to RAM 26.

The microprocessor 38, in addition to its operating system functions, preferably enables execution of software applications 58 on the device. A predetermined set of applications 58 which control basic device operations, including at least data and voice communication applications for example, will normally be installed on the device 10 during manufacture. Further applications may also be loaded onto the device 10 through the network 110, an auxiliary I/O subsystem 28, serial port 30, short-range communications subsystem 40 or any other suitable subsystem 42, and installed by a user in the RAM 26 or a non-volatile store for execution by the microprocessor 38. Such flexibility in application installation increases the functionality of the device and may provide enhanced on-device functions, communication-related functions, or both. For example, secure communication applications may enable electronic commerce functions and other such financial transactions to be performed using the device 10.

In a data communication mode, a received signal such as a text message or web page download will be processed by the communication subsystem 11 and input to the microprocessor 38, which will preferably further process the received signal for output to the display 22, or alternatively to an auxiliary I/O device 28. A user of device 10 may also compose data items such as email messages for example, using the keyboard 32 in conjunction with the display 22 and possibly an auxiliary I/O device 28. Such composed items may then be transmitted over a communication network through the communication subsystem 11.

The serial port 30 in Fig. 1 would normally be implemented in a personal digital assistant (PDA)-type communication device for which synchronization with a user's desktop computer (not shown) may be desirable, but is an optional device component. Such a port 30 would enable a user to set preferences through an external device or software application and would extend the capabilities of the device by providing for information or software downloads, including user interface information, to the device 10 other than through a wireless communication network.

A short-range communications subsystem 40 is a further component which may provide for communication between the device 10 and different systems or devices, which need not necessarily be similar devices. For example, the subsystem 40 may include an infrared device and associated circuits and components or a Bluetooth™ communication module to provide for communication with similarly enabled systems and devices.

Wireless mobile network 110 is, in an example embodiment, a wireless packet data network, (e.g. Mobitex™ or DataTAC™), which provides radio coverage to mobile electronic devices 10, although it could be any other types of wireless networks. Wireless mobile network 110 may also be a voice and data network such as GSM (Global System for Mobile Communication) and GPRS (General Packet Radio System), CDMA (Code Division Multiple Access), or various other third generation networks such as EDGE (Enhanced Data rates for GSM Evolution) or UMTS (Universal Mobile Telecommunications Systems).

As noted above, individual software applications 58 or the operating system 54 may include a user interface layout. The layout specifies where particular user interface fields are place in the user interface, *i.e.* button fields, text fields, data entry fields, etc. Common fields may be implemented as a command within a library 132 stored on the device 10. For example, a basic text field or a basic data entry field may be objects defined within the library 132. In some cases, a custom field may be specific to a software application 58 and may be implemented within the software application 58.

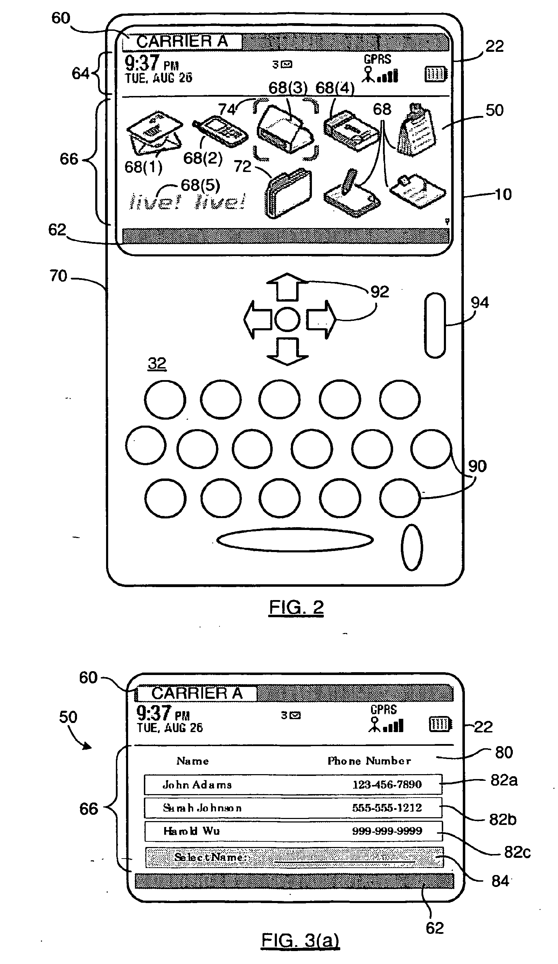

Reference is now made to Figure 2, which diagrammatically shows a front view of the mobile electronic device 10 of Figure 1. The mobile electronic device 10 is housed within a hard plastic main body case 70 that is configured to be held with one or two hands while the device 10 is in use. The mobile electronic device 10 will typically be small enough to fit inside a standard purse or suit jacket pocket. The keyboard 32 includes buttons or keys 90, 92 positioned to be actuated by the thumbs or fingers of the user. In one example embodiment, alphanumeric keys 90 are arranged in a compressed QWERTY configuration, although other keyboard configurations or user input devices could be used with device 10.

As shown in Figure 2, a graphical user interface 50 displayed on the display 22 of mobile electronic device 10 provides visual information to the user. In Figure 2, a home or main screen user interface is shown from which various applications resident on the mobile electronic device 10 can be selected and launched. The main screen user interface 50 includes the following theme-able areas or sections: a title banner 60, a status section 64, a selection banner 62, and a client section 66, each of which display one or more elements. In the illustrated embodiment, the title banner 60 includes a coloured, for example red, band at the top of display 22, that includes a text element displaying the name of the carrier ("Carrier A") that operates the home wireless network 110 in which the device 10 operates. The status section 62 features status information including, for example, date and time, an unread incoming message count, wireless network type (GPRS), received signal strength, and battery strength. As can be seen from Figure 2, displayed status elements can include alphanumeric values and/or graphic images.

The client section 66 displays elements that include a number of selectable application icons 68 and folder icons 72 that are presented on a background. The icons 68, 72 can be "focused" or selected with a caret 74 (or other type of pointer) that moves around the client section 66 in response to user manipulation of navigation keys 92 and/or scrolling of thumb scroll wheel 94, and/or other predetermined user input. The application icons 68 include, among other things, a mail messages icon 68(1), a phone application icon 68(2), an address book icon 68(3), a calendar icon 68(4), and a browser icon 68(5). Once an application icon 68 or a folder icon is focused with caret 74 it can be launched or opened by the user taking a predetermined action such as, for example, pressing a predetermined control key or pressing thumb scroll wheel 94. Such activity will typically result in a different graphic user interface being presented to the user on display 22. In the example shown in Figure 2, the selection banner 62 displays the name ("Contacts") associated with the application or folder icon that is currently focused by caret 74.

The theme, namely selected visual attributes, of the user interface 50 can be customized and changed. In one embodiment the following visual attributes of each section can be specified for the user interface 50: foreground color; background color; focus foreground color; selection foreground color; selection background color; background image; font; font-family; font-style; font-weight; font-stretch; font-size. In respect of the elements within each section, the graphic images used to display status information and the graphics images associated with applications icons and folder icons can be specified. In one embodiment, the order of displayed application and folder icons can be specified, as well as the hierarchical contents of folders.

The theme-able attributes of user interface 50 can be specified and customized based on user interface files stored on the mobile electronic device 10. These files may be loaded to the device 10 during manufacturing or may be downloaded by the mobile electronic device 10 from UI data provider system 125.

A UI theme file 130 stored on the mobile electronic device 10 contains information required by the mobile electronic device 10 to implement a particular user interface theme. For example, the UI theme file 130 may include information required to customize the user interface 50 to a color, logo and icon scheme preferred by the carrier that operates the home wireless network 110 of mobile electronic device 10. In some embodiments, the UI theme file 130 may be purchasable file that includes information required to customize the user interface 50 to a color, logo and icon scheme associated with an organization such as a favoured team.

In various embodiments, one or more UI files 130 are provided to mobile electronic device 10 in response to requests for specific UI files 130 from the mobile electronic device 10. For example, the user of a mobile electronic device 10 may decide to download the UI theme file 130 associated with a specific theme - for example, a theme related to a favourite sports team. In other embodiments, one or more UI files 130 may be pre-loaded onto the device 10 prior to shipping of the device 10. In some embodiments, UI theme files 130 may be periodically pushed over wireless network 110 to selected devices 10 as part of system updating or maintenance performed by the wireless network carrier.

A UI theme manager (not shown) may be provided on the device 10 to track the available UI theme files 130 on the device and the current selected UI theme file 130. The UI theme manager may permit a user to select the current UI theme from amongst the available themes based on the UI theme files 130 on the device 10. The UI theme manager alerts an active software application to the current selected UI theme, so that the user interface for the active software application is rendered in accordance with the theme.

Reference is now made to Figure 3(a) which shows the user interface 50 in an "Contacts" state. In response to the user selection of the "Contacts" icon 68(3) (Fig. 2) or symbol, the mobile electronic device 10 has launched the Contacts software application and the user interface 50 has displayed a Contacts interface in the client section 66. In one embodiment, the Contacts interface includes a heading field 80, and a list of entries 82 each having a stored name and its associated phone number. The Contacts feature may further include a search or choice field 84, wherein a user may enter a name for searching or selection. The individual entries 82a, 82b, 82c are "editable" fields, meaning that the user may edit the name and/or the phone number.

In general, a user interface for a software application, such as the user interface 50 shown in Figure 2 or Figure 3(a), may be defined in terms of 'fields'. The user interface 50 is formed from a collection or hierarchy of fields. Fields which contain other fields are referred to as "managers" or, in one embodiment, "vertical field managers" (VFM). Each field or VFM corresponds to a defined portion of the user interface 50. The arrangement of fields in the user interface is defined, typically, in a layout specified by the software application.

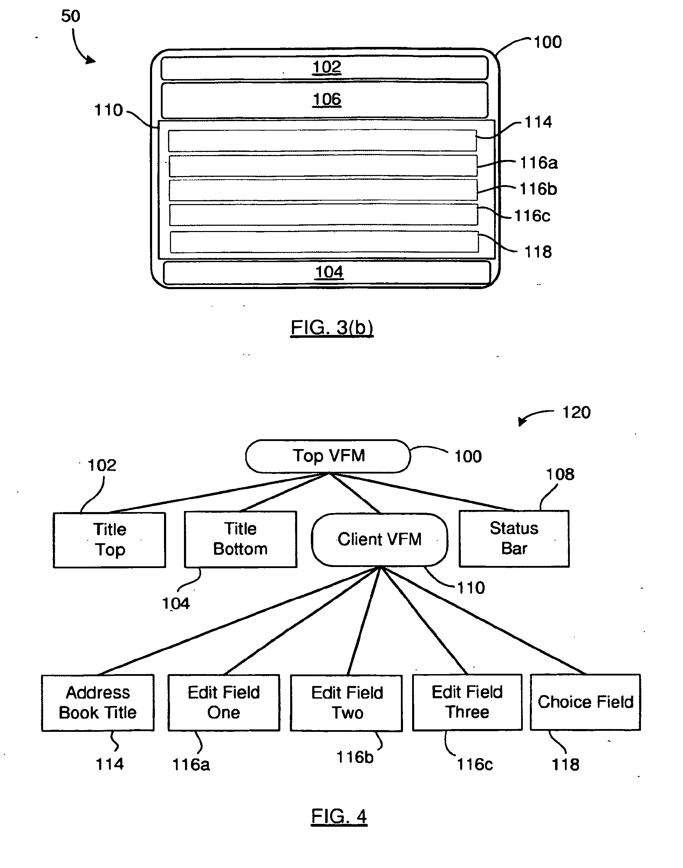

Reference is now made to Figures 3(b) and 4. Figure 3(b) diagrammatically shows the arrangement of fields for the user interface 50 of Figure 3(a). Figure 4 diagrammatically illustrates a field hierarchy 120 for the user interface 50 shown in Figures 3(a) and 3(b).

The example user interface 50 comprises a top level VFM 100 containing a first title field 102 for the top title banner and a second title field 104 for the bottom selection banner. The top level VFM 100 also contains a status field 106, which contains the status display information, and a client VFM 110, which contains the client section. The status field 106 may, for example, be implemented as an SVG file compiled into a .pme file. The SVG file defines and implements display of the status information including the time and date, message count, signal strength, and a battery charge level. In some embodiments, one or more of these fields may be managers containing further fields.

The client VFM 110 contains a Contacts title field 114 displaying the heading information "name" and "phone number". It also contains editable fields 116a, 116b, and 116c, each being an entry in the Contacts. Below the editable fields 116, the client VFM 110 contains a choice field 118 displaying a label followed by a user text entry space.

As described above, the current UI theme file 130 (Fig. 1) may define the visual attributes associated with the graphics displayed on the device 10. In particular, a theme-attribute set (TAS) specifies the settings of theme-able visual attributes. The UI theme file 130 may contain a single default TAS which defines the theme-able attributes; however, in some cases, the UI theme file 130 may include more than one TAS. A selected TAS may be applied on a field-by-field basis. In other words, each field may be associated with a particular TAS. In this manner, for instance, the first title field 102 may be given a distinctive foreground and background colouring, for example white on red, to make it stand out from the other fields in the user interface 50 and appear as a banner. In one embodiment, a parent-child relationship governs application of TASs; meaning that a field contained in a manager inherits the TAS associated with the manager (or its parent).

In order to associate a field with a TAS, the field may be linked to a selected TAS using, for example, tags. For instance, in a Java implementation, there may be a mapping of a field to a TAS. The mapping may be specified within the software application 58 (Fig. 1) or library 132 (Fig. 1) that implements the field. With a default UI theme, the mapping to a particular field typically occurs where the field object is implemented, such as within the library 132. In another embodiment, the mapping is contained within the UI theme file 130, and a UI theme manager alerts an active software application 58 to the current theme set and any TAS mappings that override the default mappings. In a Java implementation, for example, the association of a tag with a field may take the form:

```
                        Choice.java
                                 Choice() {
                                    setTag("choice");
                                 }
```

whereby the command setTag associates the tag "choice" with the Choice field. Accordingly, on rendering the Choice field, the device 10 uses the TAS named "choice" to govern the visual attributes of the field.

The precise visual attributes of the TAS named "choice" may be defined in the UI theme file 130. In one embodiment, the UI theme file 130 is created in part from an UI theme XML file. The UI theme file 130 may result from the combination of the UI theme XML file and one or more graphics files, all of which are passed through compiler to produce a file such as a Java file. Further details regarding the creation of a user interface theme file are described in US provisional patent application no. 60/499,437 filed September 2, 2003. In one example embodiment, a UI theme XML file setting a theme for the first title field 102 may take the form:

```
                       <attribute-set name="title">
                            <foreground color="white">
                            <background color="red">
                            <font style="bold">
                       </attribute-set>
```

It will be appreciated that there may be a default or base TAS associated with the user interface 50 and that any 'child' field or manager inherits the default settings except to the extent that its associated TAS establishes new settings. Accordingly, if a default TAS establishes a setting, *e*.*g*. a particular font, that setting need not be reestablished at each field or manager.

The process of rendering a user interface upon a display screen may be broken into three basic steps. The first step is an instantiation or creation step in which the system processor 38 (Fig. 1) or graphics subsystem initializes the display screen 22 (Fig. 1) and sets up the hierarchy of managers and fields for the user interface 50 (Fig. 2) defined by the layout scheme for the software application 58 (Fig. 1).

The second step is a layout step to establish and configure the user interface layout. This step takes into account the relative size of the screen, the fields, and some of the theme-able attributes to determine scaling and placement. The processor 38 also recognizes the applicable TAS for each field and obtains the theme data necessary to implement the theme. It may obtain the necessary data from, for example, the UI theme file 130.

The third step is to paint (or render) the actual graphical elements onto the screen. In a Java implementation, this involves invoking the paint() operation for each field or manager. The painting operation or step involves a paint module 'walking' the tree structure of the field hierarchy 120 (Fig. 4) defined in the software application. Each field implementation, whether implemented within the library 132 (Fig. 1), within the application 58 (Fig. 1), or elsewhere, also implements the paint() function for rendering the field. In other words, at each field or manager in the hierarchy, paint() is invoked to render the field or manager.

For example, with reference to Figure 4, the paint module begins with the top level VFM 100 and applies the default TAS. This may include applying a background colour or other operations. The module then recognizes that it has four child branches and steps down each one in turn. For example, a paint module is invoked with regard to the first title field 102. The paint operation may recognize that the first title field 100 is associated (through its tag) with the "title" TAS. Accordingly, it renders the background of the first title field 102 in red and outputs the text "CARRIER A" in white. Since the first title field 102 has no child branches, control reverts back to the paint module invoked at the top level VFM 100, upon which it traces out another child branch.

The painting operation continues until the whole field hierarchy 120 has been rendered upon the display screen. At each field or manager a paint module applies the visual attributes mapped to, and associated with, the field or manager in rendering the field or manager. In this manner, the UI theme file 130 is capable of having different visual attributes (*i.e*. TASs) associated with different fields in the user interface 50.

A difficulty that arises is that only a single TAS may be associated with a given field. This does not necessarily pose a difficulty for languages in which all fields are simple elements. For example, hyper-text markup language (HTML) features only simple fields. In other words, within a table object there are individually defined rows, each having individually defined edit fields, text fields, etc. HTML does not provide for complex fields. A drawback of having only simple fields is that each field is a separate entity or element, each with its own overhead of objects. Accordingly, using only simple fields to define a user interface results in greater processing overhead.

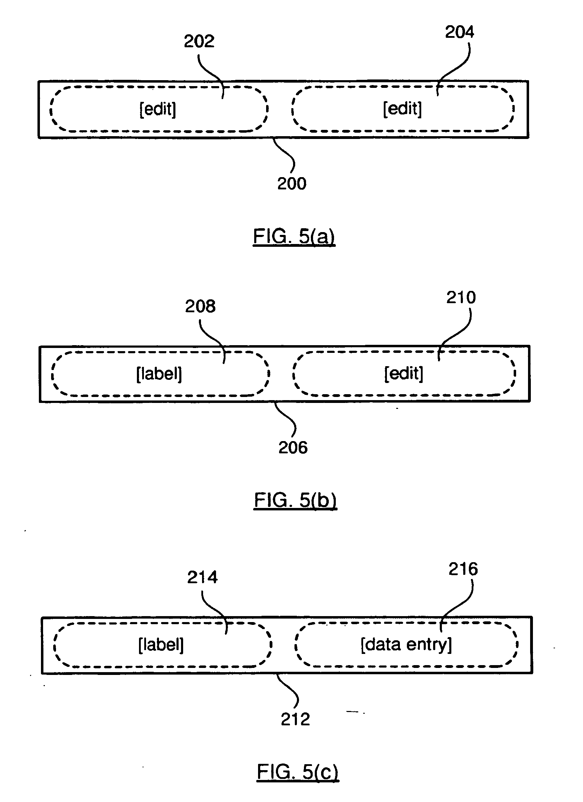

Other languages, like Java, allow for complex fields. In a complex field, the field has more than one region or part. Reference is made to Figures 5(a), (b), and (c), which show example complex fields. Figure 5(a) shows a compound edit field 200. The compound edit field 200 comprises a concatenation of two edit regions 202, 204. The compound edit field 200 may, for example, be used in an address book for displaying a name and phone number. -

Figure 5(b) shows a label-edit field 206. The label-edit field 206 comprises a concatenation of a label region 208 and an edit region 210. Figure 5(c) shows a choice field 212. The choice field 212 comprises a concatenation of a label region 214 and a data entry region 216.

Those of ordinary skill in the art will appreciate that there are other examples of complex fields. Other complex fields may include more than two regions. For example, a complex field may include a list having a plurality of entries, or a table having a plurality of rows, each having a plurality of edit regions.

When a TAS is associated with a complex field, the TAS applies uniformly to all regions of the field. For example, with a choice field having a label region followed by a data entry region, the same background color, font, font sizing, foreground color, etc., applies to both the label region and the data entry region.

To customize the visual appearance of a complex field, the present application provides a mechanism and method for overriding the TAS associated with a complex field for a selected region of the complex field.

In accordance with an aspect of the present application, during a painting or rendering operation within a complex field, the current visual attributes associated with the complex field may be stored, following which new visual attributes are specified for a defined region within the complex field. Graphical elements, which may include images, text, or other visual elements, are output to the defined region in accordance with the newly specified visual attributes. The stored visual attributes are then restored or reinstated for subsequent painting or rendering operations upon the remainder of the complex field.

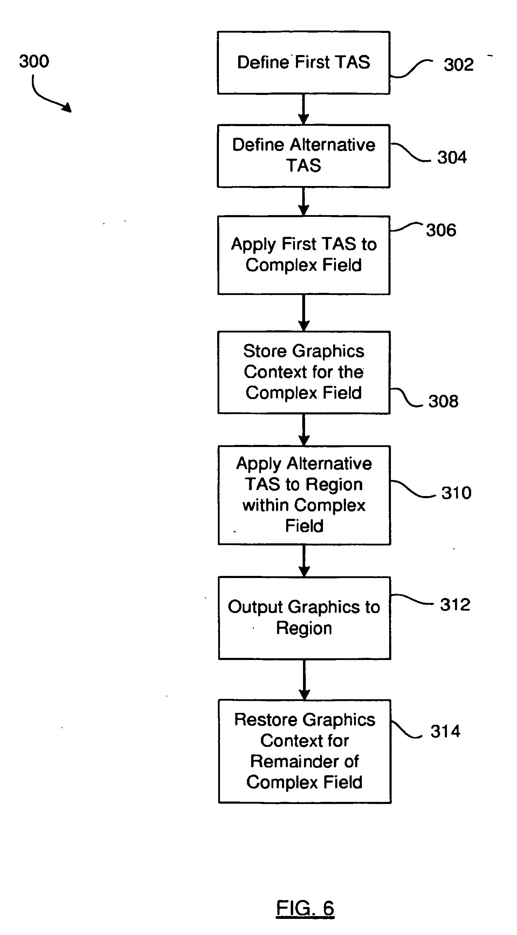

Reference is now made to Figure 6, which shows, in flowchart form, a method 300 for customizing the visual attributes of a complex field in a user interface. The method 300 begins in step 302, wherein a first TAS is defined for the complex field. This may include defining a TAS applicable to a parent element of the complex field, such as a manager. It may further include the default TAS applicable to the user interface in general. In one embodiment, step 302 includes a specific TAS associated with the complex field, and includes a step of linking or mapping the complex field to the specific TAS. Linking may include setting a tag within the complex field implementation, wherein the tag references the specific TAS. The step of defining the first TAS includes defining at least one visual attribute for the complex field. Visual attributes may include foreground color, background color, focus foreground color, selection foreground color, selection background color, background image, font, font-family, font-style, font-weight, font-stretch, or font-size. Other visual attributes may also or alternatively be specified in the first TAS.

In step 304, an alternative TAS is defined. The alternative TAS includes at least one visual attribute differing from the visual attributes specified in the first TAS defined in step 302. For example, the alternative TAS may specify a different foreground colour, font, font size, etc. The alternative TAS is intended for application to a region within the complex field. For example, it may be intended that a label region be rendered in a "bold" font or darker foreground colour, so as to make it stand out from and appear distinct from an adjacent user data entry region.

It will be understood that the first TAS and the alternative TAS may be defined off-line using, for example, XML code, which is subsequently compiled into a UI Theme File and loaded to an electronic device. The UI Theme File may, for example, be a Java file containing code instructions defining the first TAS and the alternative TAS.

In step 306, the first TAS is applied to the complex field. The first TAS is associated with the complex field (or a parent manager) through linking or mapping. The information and attributes specified by the first TAS may be loaded and applied during the layout phase prior to the paint phase.

In step 308, during the paint phase associated with the complex field, the graphics context, i.e. visual attributes and characteristics, currently associated with the complex field are remembered. In other words, the visual attributes specified by the first TAS are stored in memory so that they can be restored later. In one embodiment, the graphics context is stored through pushing the graphics context onto a stack. Methods and systems for pushing a graphics context onto a graphics stack are described in greater detail in US patent application serial number 10/189,715, filed July 3, 2004. It will be understood that there are other methods of storing or remembering the graphics context.

The alternative TAS is then applied or invoked with regard to a specified region in step 310. Accordingly, any new visual attributes specified by the alternative TAS take effect for subsequent rendering to the screen.

In step 312, graphics are output to the specified region. This may include text, images, background images, graphic elements like lines or borders, and other displayable elements. The output graphics are subjected to the settings of the alternative TAS. Accordingly, if the alternative TAS specifies a font, font-size, font-colour, etc., then these settings are applied to text output to the specified region.

Following the output of graphics in step 312, in step 314 the graphics context, *i.e*. the first TAS settings, stored in step 308 are reinstated. In one embodiment, this step 314 includes popping the stack on which the graphics context was stored. Any subsequent output of graphics, including text, to regions of the complex field outside of the specified region will feature visual attributes given by the first TAS.

In one embodiment, the complex field object is implemented using Java. For example, with respect to a complex field having a label region and a text input region, the painting/rendering function or operation may be implemented in part using program instructions having a form similar to the following:

```
           protected void paint (Graphics g) {
                         g.pushContext(0,0_ labelWidth,_labelHeight()) ;
                         apply ThemeAttributeSpecial (_labelAttr, g);
                         //there may be a background draw call here for the label
                         g.drawText (label, 0, 0);
                         g.popcontext() ;
                         g.draw Text (choiceText, _x, 0);
            }
```

In the above-described example, the command *g.pushContext* is a graphics operation for pushing the current graphics context, *i.e*. visual attributes, for a defined region onto a stack. Methods and systems for pushing a graphics context onto a graphics stack are described in greater detail in US patent application serial number 10/189,715, filed July 3, 2004. The region is defined using the parameters _labelWidth and _labelHeight().

The command *g.popContext* restores the graphics context, *i.e.* visual attributes, that were stored on the stack. Accordingly, subsequent operations, like the output of the *choice Text* data input object, are governed by the restored graphics context.

After pushing the graphics context onto the stack, the command *apply TASpecial* is used to apply the alternative TAS, associated with the tag "label", to the region. Accordingly, the *drawText* operation for outputting the text string *label* results in text output to the screen having the visual attributes specified in the alternative TAS.

It may be noted that during the layout phase, the complex field may take into account any applicable alternative TASs that apply to it. For example, if the complex field has a region that is associated with an alternative TAS, and the alternative TAS specifies a different font (i.e. larger, bold, or different family), then the different font affects the font metrics that are taken into account in the layout phase. In one embodiment, this results in program instructions having the form

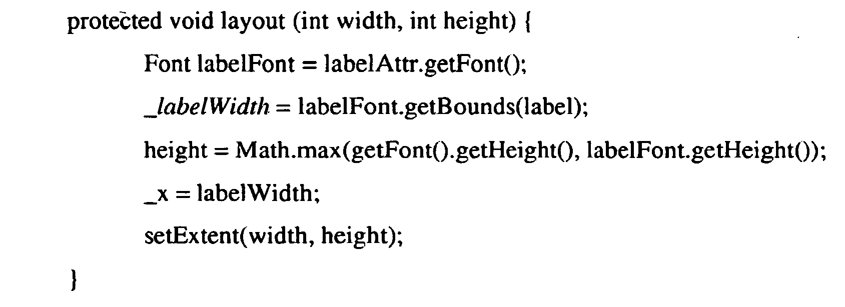

The above-described embodiments of the present application are intended to be examples only. Alterations, modifications and variations may be effected to the particular embodiments by those skilled in the art without departing from the scope of the application, which is defined by the claims appended hereto.

## Claims

1. A method for customizing a complex field in a user interface (50), the complex field having at least two regions, the method comprising:
providing a theme file (130) defining predefined visual attributes and defining a regional visual attribute;
associating the predefined visual attributes with the complex field;
performing a rendering operation, and during the rendering operation carrying out the following steps:
storing the predefined visual attributes with respect to the complex field;
applying said regional visual attribute to one of the at least two regions;
outputting graphics to said one of the at least two regions, said graphics conforming to said regional visual attribute; and
restoring the predefined visual attributes with respect to the other regions of the complex field.

2. The method claimed in claim 1, wherein the step of applying the regional attribute comprises retrieving the regional visual attribute from said theme file.

3. The method claimed in claim 1 or 2, wherein the step of storing the predefined visual attributes comprises pushing a graphics context onto a stack.

4. The method claimed in claim 3, wherein the step of restoring the predefined visual attributes comprises popping said stack to restore said graphics context.

5. The method claimed in any of claims 1 to 4, wherein the predefined visual attributes comprise one or more attributes selected from a list consisting of foreground color, background color, focus foreground color, selection foreground color, selection background color, background image, font, font-family, font-style, font-weight, font-stretch, and font-size.

6. The method claimed in claim 5, wherein the regional visual attribute comprise one or more attributes selected from the list consisting of foreground color, background color, focus foreground color, selection foreground color, selection background color, background image, font, font-family, font-style, font-weight, font-stretch, and font-size.

7. The method claimed in any of claims 1 to 6, wherein the step of outputting graphics comprises outputting text characters

8. The method claimed in any one of claim 1 to 7, wherein said theme file comprises one or more theme attribute sets, and one of said theme attribute sets defines said regional visual attribute.

9. The method claimed in claim 8, further comprising an initial step of providing code for implementing said user interface, wherein said code defines said complex field and comprises an association between said complex field and said one of said theme attribute sets.

10. A mobile electronic device (10), comprising
a display screen (22) for displaying a user interface (50), the user interface (50) comprising a complex field having at least two regions;
memory (24, 28), the memory storing a theme file defining predefined visual attributes and defining a regional visual attribute; and
a processor (38) connected to the memory (24, 28) and to the display screen (22) for controlling operation of the display screen (22);
wherein the device (10) comprises:
a graphics component associated with said processor (38) for performing a rendering operation and, during said rendering operation, storing said predefined visual attributes associated with said complex field, applying said regional visual attribute to one of said regions, outputting graphics to said one of said regions, and restoring said predefined visual attributes with respect to other regions of said complex field.

11. The device claimed in claim 10, **characterised in that** the device (10) further comprises a stack, and wherein said graphics component stores said predefined visual attributes by pushing a graphics context for said complex field onto said stack.

12. The device claimed in claim 11, **characterised in that** said graphics component restores said predefined visual attributes by popping said stack to recover said graphics context for said complex field.

13. The device claimed in any of claims 10 to 12, **characterised in that** said predefined visual attributes comprise one or more attributes selected from a list consisting of foreground color, background color, focus foreground color, selection foreground color, selection background color, background image, font, font-family, font-style, font-weight, font-stretch, and font-size.

14. The device claimed in claim 13, **characterised in that** said regional visual attribute comprises one or more attributes selected from the list consisting of foreground color, background color, focus foreground color, selection foreground color, selection background color, background image, font, font-family, font-style, font-weight, font-stretch, and font-size.

15. The device claimed in any one of claims 10 to 14, wherein said theme file comprises one or more theme attribute sets, and one of said theme attribute sets defines said regional visual attribute.

16. The device claimed in claim 15, further comprising an application module (58) defining a layout of said user interface (50) and implementing said complex field, and **characterised in that** said implementation of said complex field comprises an association between said complex field and said one of said theme attribute sets.

17. A computer program product having a computer-readable medium embodying computer executable instructions for implementing the method of any of claims 1 to 9.

18. The computer program product claimed in claim 17, wherein said computer readable medium comprises a memory of the device of any of claims 10 to 16.

## Patentansprüche

1. Verfahren zur Individualisierung eines komplexen Felds in einer Benutzeroberfläche (50), wobei das komplexe Feld mindestens zwei Regionen aufweist und das Verfahren die folgenden Schritte umfasst:
das Bereitstellen einer Themendatei (130), die vordefinierte visuelle Attribute definiert und die ein regionales visuelles Attribut definiert;
das Assoziieren der vordefinierten visuellen Attribute mit dem komplexen Feld;
das Ausführen einer Wiedergabeoperation, und während der Wiedergabeoperation das Durchführen der folgenden Schritte:
das Speichern der vordefinierten visuellen Attribute in Bezug auf das komplexe Feld;
das Anwenden des regionalen visuellen Attributs auf eine der mindestens zwei Regionen;
das Ausgeben von Grafiken an die eine der mindestens zwei Regionen, wobei diese Grafiken dem regionalen visuellen Attribut entsprechen; und das Wiederherstellen der vordefinierten visuellen Attribute in Bezug auf die anderen Regionen des komplexen Felds.

2. Verfahren gemäß Anspruch 1, wobei der Schritt des Anwendens des regionalen Attributs das Abrufen des regionalen visuellen Attributs aus der Themendatei umfasst.

3. Verfahren gemäß Anspruch 1 oder 2, wobei der Schritt des Speicherns der vordefinierten visuellen Attribute das Eingeben eines Grafikkontexts in einen Stapelspeicher umfasst.

4. Verfahren gemäß Anspruch 3, wobei der Schritt des Wiederherstellens der vordefinierten visuellen Attribute das Entnehmen aus dem Stapelspeicher zum Wiederherstellen des Grafikkontexts umfasst.

5. Verfahren gemäß jedem der Ansprüche 1 bis 4, wobei die vordefinierten visuellen Attribute ein oder mehrere Attribute umfassen, die aus einer Liste ausgewählt werden, welche besteht aus Vordergrundfarbe, Hintergrundfarbe, Fokusvordergrundfarbe, Auswahlvordergrundfarbe, Auswahlhintergrundfarbe, Hintergrundbild, Schriftart, Schriftfamilie, Schriftstil, Schriftstärke, Schriftstreckung und Schriftgröße.

6. Verfahren gemäß Anspruch 5, wobei das regionale visuelle Attribut ein oder mehrere Attribute umfasst, die aus der Liste ausgewählt werden, welche besteht aus Vordergrundfarbe, Hintergrundfarbe, Fokusvordergrundfarbe, Auswahlvordergrundfarbe, Auswahlhintergrundfarbe, Hintergrundbild, Schriftart, Schriftfamilie, Schriftstil, Schriftstärke, Schriftstreckung und Schriftgröße.

7. Verfahren gemäß jedem der Ansprüche 1 bis 6, wobei der Schritt des Ausgebens von Grafiken das Ausgeben von Textzeichen umfasst.

8. Verfahren gemäß jedem der Ansprüche 1 bis 7, wobei die Themendatei eine oder mehrere Themenattributgruppen umfasst und wobei eine der Themenattributgruppen das regionale visuelle Attribut definiert.

9. Verfahren gemäß Anspruch 8, des Weiteren umfassend einen anfänglichen Schritt des Bereitstellens von Code zur Implementierung der Benutzeroberfläche, wobei dieser Code das komplexe Feld definiert und eine Assoziierung zwischen dem komplexen Feld und der einen der Themenattributgruppen umfasst.

10. Mobiles elektronisches Gerät (10), umfassend:
einen Anzeigebildschirm (22) zum Anzeigen einer Benutzeroberfläche (50), wobei die Benutzeroberfläche (50) ein komplexes Feld umfasst, das mindestens zwei Regionen aufweist;
Speicher (24, 28), wobei der Speicher eine Themendatei speichert, die vordefinierte visuelle Attribute definiert und die ein regionales visuelles Attribut definiert; und
einen Prozessor (38), der mit dem Speicher (24, 28) und mit dem Anzeigebildschirm (22) verbunden ist und dem Steuern des Betriebs des Anzeigebildschirms (22) dient;
wobei das Gerät (10) umfasst:
eine Grafikkomponente, die mit dem Prozessor (38) assoziiert ist, zum Ausführen einer Wiedergabeoperation und - während der Wiedergabeoperation - zum Speichern der vordefinierten visuellen Attribute, die mit dem komplexen Feld assoziiert sind, zum Anwenden des regionalen visuellen Attributs auf eine der Regionen; zum Ausgeben von Grafiken an die eine der Regionen und zum Wiederherstellen der vordefinierten visuellen Attribute in Bezug auf andere Regionen des komplexen Felds.

11. Gerät gemäß Anspruch 10, **dadurch gekennzeichnet, dass** das Gerät (10) des Weiteren einen Stapelspeicher umfasst, und wobei die Grafikkomponente die vordefinierten visuellen Attribute speichert, indem ein Grafikkontext für das komplexe Feld in den Stapelspeicher eingegeben wird.

12. Gerät gemäß Anspruch 11, **dadurch gekennzeichnet, dass** die Grafikkomponente die vordefinierten visuellen Attribute wiederherstellt, indem eine Entnahme aus dem Stapelspeicher erfolgt, um den Grafikkontext für das komplexe Feld wiederherzustellen.

13. Gerät gemäß jedem der Ansprüche 10 bis 12, **dadurch gekennzeichnet, dass** die vordefinierten visuellen Attribute ein oder mehrere Attribute umfassen, die aus einer Liste ausgewählt werden, welche besteht aus Vordergrundfarbe, Hintergrundfarbe, Fokusvordergrundfarbe, Auswahlvordergrundfarbe, Auswahlhintergrundfarbe, Hintergrundbild, Schriftart, Schriftfamilie, Schriftstil, Schriftstärke, Schriftstreckung und Schriftgröße.

14. Gerät gemäß Anspruch 13, **dadurch gekennzeichnet, dass** das regionale visuelle Attribut ein oder mehrere Attribute umfasst, die aus der Liste ausgewählt werden, welche besteht aus Vordergrundfarbe, Hintergrundfarbe, Fokusvordergrundfarbe, Auswahlvordergrundfarbe, Auswahlhintergrundfarbe, Hintergrundbild, Schriftart, Schriftfamilie, Schriftstil, Schriftstärke, Schriftstreckung und Schriftgröße.

15. Gerät gemäß jedem der Ansprüche 10 bis 14, wobei die Themendatei eine oder mehrere Themenattributgruppen umfasst und wobei eine der Themenattributgruppen das regionale visuelle Attribut definiert.

16. Gerät gemäß Anspruch 15, des Weiteren umfassend ein Anwendungsmodul (58) zum Definieren eines Layouts der Benutzeroberfläche (50) und zum Implementieren des komplexen Felds, und **dadurch gekennzeichnet, dass** die Implementierung des komplexen Felds eine Assoziierung zwischen dem komplexen Feld und der einen der Themenattributgruppen umfasst.

17. Computerprogrammprodukt, das ein computerlesbares Medium aufweist, welches computerausführbare Anweisungen verkörpert, um das Verfahren gemäß jedem der Ansprüche 1 bis 9 zu implementieren.

18. Computerprogrammprodukt gemäß Anspruch 17, wobei das computerlesbare Medium einen Speicher des Geräts gemäß jedem der Ansprüche 10 bis 16 umfasst.

## Revendications

1. Procédé permettant de personnaliser un champ complexe dans une interface utilisateur (50), le champ complexe présentant au moins deux régions, le procédé comprenant les étapes suivantes :
mise à disposition d'un fichier de thème (130) définissant des attributs visuels prédéfinis et un attribut visuel régional ;
association des attributs visuels prédéfinis au champ complexe ;
réalisation d'une opération de rendu et, au cours de l'opération de rendu,
exécution des étapes suivantes :
stockage des attributs visuels prédéfinis concernant le champ complexe ;
application dudit attribut visuel régional sur l'une des au moins deux régions ;
production de graphiques sur l'une des au moins deux régions, lesdits graphiques se conformant audit attribut visuel régional ; et
restauration des attributs visuels prédéfinis concernant les autres régions du champ complexe.

2. Procédé selon la revendication 1, dans lequel l'étape d'application de l'attribut régional comprend l'extraction de l'attribut visuel régional hors dudit fichier de thème.

3. Procédé selon la revendication 1 ou 2, dans lequel l'étape de stockage des attributs visuels prédéfinis comprend le chargement d'un contexte graphique sur une pile.

4. Procédé selon la revendication 3, dans lequel l'étape de restauration des attributs visuels prédéfinis comprend le désempilement de ladite pile pour restaurer ledit contexte graphique.

5. Procédé selon l'une quelconque des revendications 1 à 4, dans lequel les attributs visuels prédéfinis comprennent un ou plusieurs attributs choisis parmi une liste composée de la couleur de premier plan, la couleur d'arrière-plan, la couleur de focalisation de premier plan, la couleur de sélection de premier plan, la couleur de sélection d'arrière-plan, l'image d'arrière-plan, la police, la famille de police, le style de police, l'épaisseur de la police, l'étirement de la police et la taille de la police.

6. Procédé selon la revendication 5, dans lequel l'attribut visuel régional comprend un ou plusieurs attributs choisis parmi une liste composée de la couleur de premier plan, la couleur d'arrière-plan, la couleur de focalisation de premier plan, la couleur de sélection de premier plan, la couleur de sélection d'arrière-plan, l'image d'arrière-plan, la police, la famille de police, le style de police, l'épaisseur de la police, l'étirement de la police et la taille de la police.

7. Procédé selon l'une quelconque des revendications 1 à 6, dans lequel l'étape de production de graphiques comprend la production de caractères de texte.

8. Procédé selon l'une quelconque des revendications 1 à 7, dans lequel ledit fichier de thème comprend un ou plusieurs ensembles d'attributs de thème, et l'un desdits ensembles d'attributs de thème définit ledit attribut visuel régional.

9. Procédé selon la revendication 8, comprenant une première étape de mise à disposition de code permettant de mettre en oeuvre ladite interface utilisateur, dans lequel ledit code définit ledit champ complexe et comprend une association entre ledit champ complexe et ledit un desdits ensembles d'attributs de thème.

10. Dispositif électronique mobile (10) comprenant
un écran de visualisation (22) permettant d'afficher une interface utilisateur (50), l'interface utilisateur (50) comprenant un champ complexe présentant au moins deux régions ;
une mémoire (24, 28), la mémoire stockant un fichier de thème définissant des attributs visuels prédéfinis et un attribut visuel régional ; et
un processeur (38) connecté à la mémoire (24, 28) et à l'écran de visualisation (22) afin de contrôler le fonctionnement de l'écran de visualisation (22) ;
dans lequel le dispositif (10) comprend :
un élément graphique associé audit processeur (38) afin de réaliser une opération de rendu et, au cours de l'opération de rendu, stocker lesdits attributs visuels prédéfinis associés audit champ complexe, appliquer ledit attribut visuel régional sur l'une desdites régions, produire des graphiques sur ladite une desdites régions et restaurer lesdits attributs visuels prédéfinis concernant d'autres régions dudit champ complexe.

11. Dispositif selon la revendication 10, **caractérisé en ce que** le dispositif (10) comprend en outre une pile, et dans lequel ledit élément graphique stocke lesdits attributs visuels prédéfinis en chargeant un contexte graphique pour ledit champ complexe sur ladite pile.

12. Dispositif selon la revendication 11, **caractérisé en ce que** ledit élément graphique restaure lesdits attributs visuels prédéfinis en désempilant ladite pile afin de récupérer ledit contexte graphique pour ledit champ complexe.

13. Dispositif selon l'une quelconque des revendications 10 à 12, **caractérisé en ce que** lesdits attributs visuels prédéfinis comprennent un ou plusieurs attributs choisis parmi une liste composée de la couleur de premier plan, la couleur d'arrière-plan, la couleur de focalisation de premier plan, la couleur de sélection de premier plan, la couleur de sélection d'arrière-plan, l'image d'arrière-plan, la police, la famille de police, le style de police, l'épaisseur de la police, l'étirement de la police et la taille de la police.

14. Dispositif selon la revendication 13, **caractérisé en ce que** ledit attribut visuel régional comprend un ou plusieurs attributs choisis parmi une liste composée de la couleur de premier plan, la couleur d'arrière-plan, la couleur de focalisation de premier plan, la couleur de sélection de premier plan, la couleur de sélection d'arrière-plan, l'image d'arrière-plan, la police, la famille de police, le style de police, l'épaisseur de la police, l'étirement de la police et la taille de la police.

15. Dispositif selon l'une quelconque des revendications 10 à 14, dans lequel ledit fichier de thème comprend un ou plusieurs ensembles d'attributs de thème, et l'un desdits ensembles d'attributs de thème définit ledit attribut visuel régional.

16. Dispositif selon la revendication 15, comprenant en outre un module d'application (58) qui définit une configuration de ladite interface utilisateur (50) et met en oeuvre ledit champ complexe, et **caractérisé en ce que** ladite mise en oeuvre dudit champ complexe comprend une association entre ledit champ complexe et ledit un desdits ensembles d'attributs de thème.

17. Progiciel présentant un support lisible par ordinateur intégrant des instructions pouvant être exécutées par ordinateur, destiné à mettre en oeuvre le procédé selon l'une quelconque des revendications 1 à 9.

18. Progiciel selon la revendication 17, dans lequel ledit support lisible par ordinateur comprend une mémoire du dispositif selon l'une quelconque des revendications 10 à 16.
